# EUROPEAN PATENT APPLICATION

(11) **EP 4 446 012 A1**
(43) Date of publication of application: **16.10.2024**
(21) Application number: 22910796.6
(22) Date of filing: 30.11.2022
(51) Int. Cl.: B02C 15/04

(54) **PULVERIZER ROLLER, SOLID FUEL PULVERIZATION DEVICE, AND METHOD FOR MANUFACTURING PULVERIZER ROLLER**

(30) Priority: 20.12.2021 JP 2021206141
(71) Applicant: Mitsubishi Heavy Industries, Ltd., Tokyo 100-8332 (JP); Mitsubishi Power, Ltd., Nishi-ku, Yokohama-shi Kanagawa 220-8401 (JP)
(72) Inventor: YAMAGUCHI, Sotaro, Tokyo 100-8332 (JP)
(74) Representative: Studio Torta S.p.A.
(86) International application number: PCT/JP2022/044236
(87) International publication number: WO 2023/120079

(57) **Abstract**

The disclosure intends to enable easy machining such as cutting to be applied and reduce manufacturing costs. A pulverizing roller (13) includes: a journal housing supported rotatably about a central axis (C2) with respect to a housing; and a circular annular roller part (49) externally fitted to an outer circumferential part of the journal housing and configured to pulverize solid fuel between the pulverizing table and the roller part. The roller part (49) has a machining-subjected part (53) externally fitted to the outer circumferential part of the journal housing and a base part (51) provided to the outer circumferential part of the machining-subjected part (53). The machining-subjected part (53) has an inner circumferential part (54) covering the inner circumferential face of the base part (51) and being in contact with the outer circumferential part of the journal housing and an end face part (55) forming an end face in a direction of the central axis (C2) of the roller part (49) and is formed of a material having better workability than the base part (51).

## Description

### [Technical Field]

The present disclosure relates to a pulverizing roller, a solid fuel pulverizing device, and a manufacturing method of a pulverizing roller.

### [Background Art]

Conventionally, solid fuel such as biomass fuel or coal is pulverized by a pulverizer (mill) into fine powder with particles within a predetermined particle diameter range and then supplied to a combustion device. Solid fuel is input to a pulverizing table, and the mill holds and pulverizes the solid fuel between the pulverizing table and a pulverizing roller. Out of the solid fuel pulverized into fine powder, pulverized fuel with particles within a predetermined particle diameter range is sorted by a classifier, carried to a boiler by a carrier gas (primary air) supplied from the outer circumference of the pulverizing table, and combusted by the combustion device. In a thermal power plant, steam is generated by heat exchange with a combustion gas generated by combustion of pulverized fuel in a boiler, a steam turbine is driven and rotated by the steam, a power generator connected to the steam turbine is driven and rotated, and thereby power is generated.

It is known that a portion of a pulverizing roller used for such mills that is actually in contact with solid fuel and pulverizes the solid fuel (hereafter, the portion is referred to as "roller part") is manufactured by casting or the like (for example, Patent Literature 1).

Patent Literature 1 discloses a method of manufacturing a roller in which an inner layer, an outer layer, and a separation cylinder plate are integrated with each other, and the method includes providing, in a mold, the separation cylinder plate that separates the inner layer and the outer layer of the roller from each other, pouring molten metal of high-carbon high-chromium cast iron, which will be the outer layer, into one face side of the separation cylinder plate, and pouring molten metal of gray cast iron, which will be the inner layer, into the other side of the separation cylinder plate.

### [Citation List]

### [Patent Literature]

[PTL 1]
Japanese Patent Application Laid-Open No. S61-229459

### [Summary of Invention]

### [Technical Problem]

A circular annular roller part manufactured by casting or the like may be fitted to a support member (for example, a support member provided between the roller part and a support shaft and supporting the roller part rotatably about the support shaft) such that the inner circumferential face of the roller part and the outer circumferential faces of other members are in contact with each other. In such a case, the inner circumferential face of the roller part is machined in order to have a predetermined dimension of the inner diameter of the roller part. Further, machining may also be applied to a portion other than the inner circumferential face of the roller part (for example, an end face) in order to have predetermined dimensions of the roller part. In general, however, since roller parts are formed of a material that is less likely to be worn (for example, high-chromium cast iron or the like), there is a problem of difficulty in applying machining thereto. Thus, the process to apply machining to roller parts takes a longer time resulting in a longer time required for manufacturing pulverizing rollers, and this may increase the manufacturing cost of the pulverizing rollers. Further, for example, when a pulverizing roller is formed of high-chromium cast iron or the like, once erroneous fabrication (such as excessive cutting) occurs, such high-chromium cast iron will be discarded because welding repairment is not applicable thereto, and this results in a low yield.

The present disclosure has been made in view of such circumstances and intends to provide a pulverizing roller, a solid fuel pulverizing device, and a manufacturing method of a pulverizing roller that enable easy machining such as cutting to be applied and can reduce the manufacturing cost.

### [Solution to Problem]

To solve the problem described above, the pulverizing roller, the solid fuel pulverizing device, and the manufacturing method of the pulverizing roller of the present disclosure employ the following solutions.

The pulverizing roller according to one aspect of the present disclosure is a pulverizing roller accommodated in a housing and configured to hold solid fuel between a rotating pulverizing table and the pulverizing roller to pulverize the solid fuel, the pulverizing roller being forced to rotate by being subjected to rotational force from the pulverizing table. The pulverizing roller includes: a support part supported rotatably about a central axis with respect to the housing; and a circular annular roller part externally fitted to an outer circumferential part of the support part and configured to pulverize solid fuel between the pulverizing table and the roller part, the roller part has a machining-subjected part externally fitted to the outer circumferential part of the support part and has a base part provided to an outer circumferential part of the machining-subjected part, and the machining-subjected part has an inner circumferential part covering an inner circumferential face of the base part and being in contact with the outer circumferential part of the support part, has an end face part forming an end face in a direction of the central axis of the roller part, and is formed of a material having better workability than the base part.

The manufacturing method of a pulverizing roller according to one aspect of the present disclosure is a manufacturing method of a pulverizing roller accommodated in a housing and configured to hold solid fuel between a rotating pulverizing table and the pulverizing roller to pulverize the solid fuel, the pulverizing roller being forced to rotate by being subjected to rotational force from the pulverizing table. The pulverizing roller includes a support part supported rotatably about a central axis with respect to the housing and a circular annular roller part externally fitted to an outer circumferential part of the support part and configured to pulverize solid fuel between the pulverizing table and the roller part, the roller part has a machining-subjected part externally fitted to the outer circumferential part of the support part and has a base part provided to an outer circumferential part of the machining-subjected part, and the machining-subjected part has an inner circumferential part covering an inner circumferential face of the base part and being in contact with the outer circumferential part of the support part, has an end face part forming an end face in a direction of the central axis of the roller part, and is formed of a material having better workability than the base part. The manufacturing method includes: a casting step of integrally molding the machining-subjected part and the base part by casting; and a machining step of applying machining to the machining-subjected part after the casting step.

### [Advantageous Effects of Invention]

According to the present disclosure, machining such as cutting can be easily applied, and the manufacturing cost can be reduced.

### [Brief Description of Drawings]

[Fig. 1] Fig. 1 is a configuration diagram illustrating a solid fuel pulverizing device and a boiler according to an embodiment of the present disclosure.
[Fig. 2] Fig. 2 is a perspective view of a pulverizing roller according to the embodiment of the present disclosure.
[Fig. 3] Fig. 3 is a perspective view of a roller part according to the embodiment of the present disclosure.
[Fig. 4] Fig. 4 is a sectional view of a primary part of the pulverizing roller according to the embodiment of the present disclosure.
[Fig. 5] Fig. 5 is a schematic perspective view of a machining-subjected part according to the embodiment of the present disclosure.
[Fig. 6] Fig. 6 is a schematic diagram illustrating a mold used for manufacturing the roller part according to the embodiment of the present disclosure.
[Fig. 7] Fig. 7 is a schematic perspective view of a machining-subjected part according to a modified example for the embodiment of the present disclosure.
[Fig. 8] Fig. 8 is a diagram illustrating a circumferential sectional view of the machining-subjected part according to the modified example for the embodiment of the present disclosure.
[Fig. 9] Fig. 9 is a sectional view of a primary part of a pulverizing roller according to a modified example for the embodiment of the present disclosure.
[Fig. 10] Fig. 10 is a sectional view of a primary part of a pulverizing roller according to a modified example for the embodiment of the present disclosure.

### [Description of Embodiments]

One embodiment of a pulverizing roller, a solid fuel pulverizing device, and a manufacturing method of a pulverizing roller according to the present disclosure will be described below with reference to the drawings.

An embodiment of the present disclosure will be described below with reference to the drawings. A power plant 1 according to the present embodiment includes a solid fuel pulverizing device 100 and a boiler 200.

In the following description, "above" represents a vertically upward direction, and "top" of a top part, a top face, or the like represents a vertically upper part. Further, similarly, "bottom" represents a vertically lower part, and "vertical direction" is not used in a strict sense and may includes an error.

The solid fuel pulverizing device 100 of the present embodiment is a device that pulverizes solid fuel such as biomass fuel or coal as an example and produces and supplies pulverized fuel to a burner (combustion device) 220 of the boiler 200.

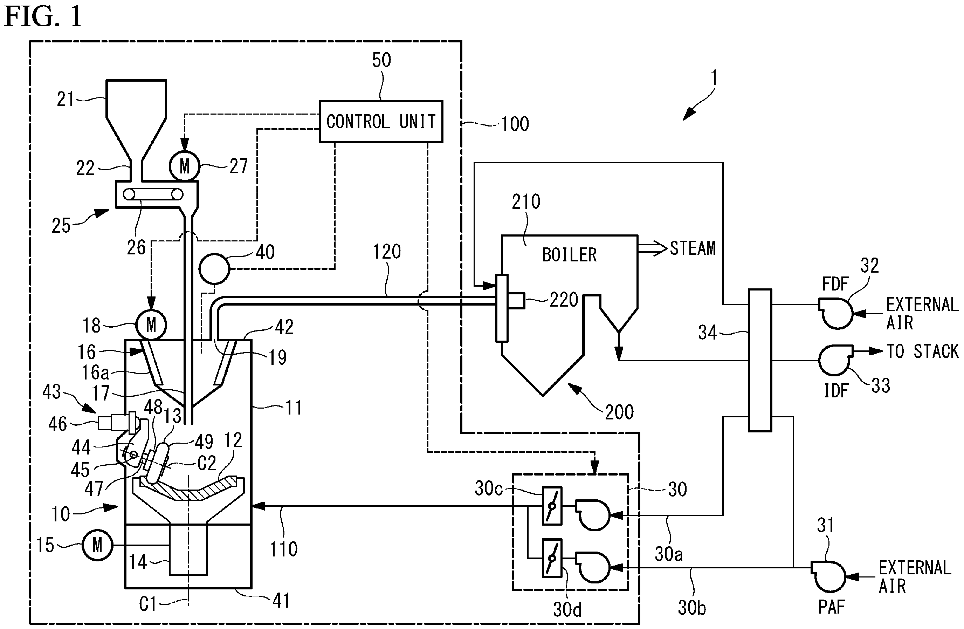

Although the power plant 1 including the solid fuel pulverizing device 100 and the boiler 200 illustrated in Fig. 1 has a single solid fuel pulverizing device 100, a system may be configured to have a plurality of solid fuel pulverizing devices 100 that correspond to a plurality of burners 220 of a single boiler 200, respectively.

The solid fuel pulverizing device 100 of the present embodiment includes a mill (pulverizing unit) 10, a bunker (storage unit) 21, a coal feeder (fuel feeder) 25, a fan unit (carrier gas supply unit) 30, a state detecting unit 40, and a control unit 50.

The mill 10 that pulverizes solid fuel such as coal or biomass fuel, which is to be supplied to the boiler 200, into pulverized fuel that is fine powder solid fuel may be of a form of pulverizing only coal, may be of a form of pulverizing only biomass fuel, or may be of a form of pulverizing biomass fuel together with coal.

Herein, the biomass fuel is an organic resource of renewable biological origin, for example, thinned wood, waste wood, driftwood, grasses, waste, sludge, tires, and recycle fuel (pellets or chips) or the like made therefrom, and is not limited to those presented here. Since the biomass fuel takes in carbon dioxide in a growth process of the biomass and thus serves as carbon neutral that does not emit carbon dioxide that becomes a greenhouse gas, various uses thereof have been studied.

The mill 10 includes a housing 11, a pulverizing table 12, a pulverizing roller 13, a gear (drive transmission unit) 14, a mill motor (drive unit) 15 connected to the gear 14 and configured to drive and rotate the pulverizing table 12, a rotary classifier (classifying unit) 16, a coal feed pipe (fuel feed unit) 17, and a classifier motor 18 configured to drive and rotate the rotary classifier 16.

The housing 11 is a casing that is formed in a cylindrical shape extending in the vertical direction and accommodates the pulverizing table 12, the pulverizing roller 13, the rotary classifier 16, and the coal feed pipe 17.

The coal feed pipe 17 is attached to the center of a ceiling 42 of the housing 11. The coal feed pipe 17 is to feed solid fuel guided from the bunker 21 via the coal feeder 25 into the housing 11 and is arranged vertically at the center position of the housing 11, and the bottom end thereof is provided extending into the housing 11.

The gear 14 is installed near a bottom face 41 of the housing 11, and the pulverizing table 12 configured to be rotated by drive force transmitted from the mill motor 15 connected to the gear 14 is arranged in a rotatable manner.

The pulverizing table 12 is a member that is circular in planar view, and the bottom end of the coal feed pipe 17 is arranged so as to face the pulverizing table 12. The top face of the pulverizing table 12 may have such a slope shape that is lower at the center and gradually becomes higher outward and have an outer circumferential part bent upward, for example. The coal feed pipe 17 feeds solid fuel (for example, coal or biomass fuel in the present embodiment) from above toward the pulverizing table 12 below, and the pulverizing table 12 holds and pulverizes the fed solid fuel between the pulverizing table 12 and the pulverizing roller 13.

Once solid fuel is input to the center of the pulverizing table 12 from the coal feed pipe 17, the solid fuel is guided to the outer circumferential side of the pulverizing table 12 by centrifugal force caused by rotation of the pulverizing table 12 and held and pulverized between the pulverizing table 12 and the pulverizing roller 13. The pulverized solid fuel is blown upward by a carrier gas (hereafter, referred to as primary air) guided from a carrier gas flow channel (hereafter, referred to as a primary air flow channel) 110 and guided to the rotary classifier 16.

The outer circumference of the pulverizing table 12 is provided with an air outlet (not illustrated) for causing primary air flowing in from the primary air flow channel 110 to flow out to the space above the pulverizing table 12 inside the housing 11. Swirl vanes (not illustrated) are installed to the air outlet and provide swivel force to the primary air blown out of the air outlet. The primary air provided with swivel force by the swirl vanes becomes an air flow having a swiveling velocity component and carries the solid fuel pulverized on the pulverizing table 12 to the rotary classifier 16 located above inside the housing 11. Note that, out of pulverized solid fuel, particles of solid fuel larger than a predetermined particle diameter are classified by the rotary classifier 16 or drop without reaching the rotary classifier 16, are returned to the pulverizing table 12, and are pulverized again between the pulverizing table 12 and the pulverizing roller 13.

The pulverizing roller 13 is a rotary body that pulverizes solid fuel fed from the coal feed pipe 17 to the pulverizing table 12. The pulverizing roller 13 is pressed against the top face of the pulverizing table 12 and cooperates with the pulverizing table 12 to pulverize solid fuel.

Although Fig. 1 illustrates only one pulverizing roller 13 as representative, a plurality of pulverizing rollers 13 are arranged circumferentially with equal intervals so as to press the top face of the pulverizing table 12. For example, three pulverizing rollers 13 are arranged circumferentially at equal intervals with angular intervals of 120 degrees on the outer circumferential part. In such a case, portions where the three pulverizing rollers 13 are in contact with the top face of the pulverizing table 12 (pressing portions) are at an equal distance from the rotation central axis of the pulverizing table 12.

The pulverizing roller 13 can be swung and displaced vertically by a journal head 43 and is supported so that the pulverizing roller 13 can come close to and separate away from the top face of the pulverizing table 12. When the pulverizing table 12 is rotated with the outer circumferential face of the pulverizing roller 13 being in contact with solid fuel on the top face of the pulverizing table 12, the pulverizing roller 13 is forced to rotate by being subjected to the rotational force from the pulverizing table 12. Once solid fuel is fed from the coal feed pipe 17, the solid fuel is pressed and pulverized between the pulverizing roller 13 and the pulverizing table 12. This pressing force is referred to as a pulverizing load.

A support arm 44 of the journal head 43 is supported with respect to the side face of the housing 11 by the support shaft 45 whose intermediate part runs horizontally so that the pulverizing roller 13 can be swung and displaced vertically about a support shaft 45. Further, the top end located on the vertically upper side of the support arm 44 is provided with a pressing device (pulverizing load application unit) 46. The pressing device 46 is fixed to the housing 11 and applies a pulverizing load to the pulverizing roller 13 via the support arm 44 and the like so as to press the pulverizing roller 13 against the pulverizing table 12. For example, the pulverizing load is provided by a hydraulic cylinder (not illustrated) activated by a pressure of a hydraulic oil supplied from the hydraulic device (not illustrated) installed outside the mill 10. Further, the pulverizing load may be provided by repulsive force of a spring (not illustrated).

The gear 14 is connected to the mill motor 15, transmits drive force of the mill motor 15 to the pulverizing table 12, and rotates the pulverizing table 12 about the central axis.

The rotary classifier (classifying unit) 16 is provided on the top of the housing 11 and has a hollow inverted conical external shape. The rotary classifier 16 has a plurality of blades 16a each extending vertically at the outer circumferential positions thereof. Each blade 16a is provided at a predetermined interval (equal interval) about the central axis of the rotary classifier 16.

The rotary classifier 16 is a device that classifies solid fuel pulverized by the pulverizing table 12 and the pulverizing roller 13 (hereafter, such pulverized solid fuel is referred to as "pulverized solid fuel") into particles of fuel that are larger than a predetermined particle diameter (for example, 70 to 100 µm for coal) (hereafter, pulverized solid fuel with particles exceeding a predetermined particle diameter is referred to as "coarse pulverized fuel") and particles of fuel that are smaller than or equal to the predetermined particle diameter (hereafter, pulverized solid fuel with particles smaller than or equal to a predetermined particle diameter is referred to as "pulverized fuel"). The rotary classifier 16 is provided with rotational drive force by the classifier motor 18 controlled by the control unit 50 and rotated around the coal feed pipe 17 about a circular cylindrical shaft (not illustrated) extending vertically with respect to the housing 11.

Note that a stationary classifier including a fixed casing with a hollow inverted conical shape and a plurality of stationary swirl vanes instead of the blades 16a at outer circumferential positions of the casing may be used as the classifying unit.

Pulverized solid fuel that has reached the rotary classifier 16 is classified such that, in accordance with relative balance between centrifugal force caused by rotation of the blades 16a and centripetal force caused by an air flow of the primary air, coarse pulverized fuel of a larger diameter is knocked off by the blades 16a and returned to and pulverized again by the pulverizing table 12, and pulverized fuel is guided to an outlet port 19 located in a ceiling 42 of the housing 11. The pulverized fuel classified by the rotary classifier 16 is discharged to a fine pulverized fuel supply flow channel (pulverized fuel supply pipe) 120 from the outlet port 19 together with the primary air and supplied to the burner 220 of the boiler 200.

The coal feed pipe (fuel feed unit) 17 is attached vertically so as to penetrate through the ceiling 42 of the housing 11 with the bottom end being provided extending into the housing 11 and feeds solid fuel input from above the coal feed pipe 17 to the center of the pulverizing table 12. A coal feeder 25 is connected to the top end of the coal feed pipe 17, and solid fuel is fed thereto.

The coal feeder 25 is connected to the bunker 21 via a downspout part 22 that is a pipe extending vertically from the bottom end of the bunker 21. A valve (a coal gate, not illustrated) for switching the discharge state of solid fuel from the bunker 21 may be provided on the way of the downspout part 22. The coal feeder 25 includes a transport unit 26 and a coal feeder motor 27. The transport unit 26 is, for example, a belt conveyer, which transports solid fuel discharged from the bottom end of the downspout part 22 to the top of the coal feed pipe 17 and inputs the solid fuel to inside thereof by drive force of the coal feeder motor 27. The feed amount of solid fuel fed to the mill 10 is controlled by a signal from the control unit 50 via adjustment of the moving speed of the belt conveyer of the transport unit 26, for example.

Typically, the inside of the mill 10 is supplied with the primary air for carrying pulverized fuel to the burner 220 and has a higher pressure than the coal feeder 25 or the bunker 21. Fuel is in a layered state inside the downspout part 22 connected between the bunker 21 and the coal feeder 25. This solid fuel layer serves to ensure a seal characteristic (material seal) for suppressing a reverse flow of the primary air and the pulverized fuel from the mill 10 to the bunker 21.

The fan unit 30 is a device that blows the primary air, which is for drying and carrying pulverized solid fuel to the rotary classifier 16, into the housing 11.

The fan unit 30 includes a primary air fan (PAF) 31, a hot gas flow channel 30a, a cold gas flow channel 30b, a hot gas damper 30c, and a cold gas damper 30d in the present embodiment in order to suitably adjust the flow rate and the temperature of the primary air blown into the housing 11.

In the present embodiment, the hot gas flow channel 30a supplies a part of air delivered from the primary air fan 31 as a hot gas that has passed through an air preheater (heat exchanger) 34 and thus has been heated. The hot gas damper 30c is provided to the hot gas flow channel 30a. The opening of the hot gas damper 30c is controlled by the control unit 50. The flow rate of the hot gas supplied from the hot gas flow channel 30a is determined by the opening of the hot gas damper 30c.

The cold gas flow channel 30b supplies a part of air delivered from the primary air fan 31 as a cold gas at normal temperature. The cold gas damper 30d is provided to the cold gas flow channel 30b. The opening of the cold gas damper 30d is controlled by the control unit 50. The flow rate of the cold gas supplied from the cold gas flow channel 30b is determined by the opening of the cold gas damper 30d.

In the present embodiment, the flow rate of the primary air is the total flow rate of the flow rate of a hot gas supplied from the hot gas flow channel 30a and the flow rate of a cold gas supplied from the cold gas flow channel 30b, and the temperature of the primary air is determined by a mixture ratio of the hot gas supplied from the hot gas flow channel 30a and the cold gas supplied from the cold gas flow channel 30b and is controlled by the control unit 50.

Further, for example, a part of a combustion gas discharged from the boiler 200 by a gas recirculation fan (not illustrated) may be guided to and mixed with the hot gas supplied from the hot gas flow channel 30a, and thereby the oxygen concentration of the primary air to be blown into the housing 11 from the primary air flow channel 110 may be adjusted. For example, when solid fuel with high ignitability (easy to ignite) is used, it is possible to suppress ignition of solid fuel in the path from the mill 10 to the burner 220 by adjusting the oxygen concentration of the primary air.

In the present embodiment, data measured or detected by the state detecting unit 40 of the mill 10 is transmitted to the control unit 50. For example, the state detecting unit 40 of the present embodiment is a differential pressure measuring unit, which measures, as the differential pressure in the mill 10, a differential pressure between the pressure at a portion where the primary air flows into the housing 11 from the primary air flow channel 110 and the pressure at the outlet port 19 where the primary air and the pulverized fuel are discharged to the pulverized fuel supply pipe 120 from inside of the housing 11. An increase and a decrease in this differential pressure in the mill 10 correspond to an increase and a decrease in a circulating amount of pulverized solid fuel circulating between a part near the rotary classifier 16 and a part near the pulverizing table 12 inside the housing 11 due to the classification effect of the rotary classifier 16. That is, since the amount and the particle diameter range of pulverized fuel discharged from the outlet port 19 can be adjusted by adjustment of the rotational number of the rotary classifier 16 in accordance with such a differential pressure in the mill 10, an amount of pulverized fuel corresponding to the feed amount of solid fuel to the mill 10 can be stably supplied to the burner 220 provided to the boiler 200 while the particle diameter of the pulverized fuel is maintained in a range that does not affect the combustibility of the solid fuel in the burner 220.

Further, for example, the state detecting unit 40 of the present embodiment is a temperature measuring unit, which determines the temperature of the primary air supplied into the housing 11 (mill inlet primary air temperature) or the temperature of a mixed gas of the primary air and pulverized fuel at the outlet port 19 (mill outlet primary air temperature) and controls the fan unit 30 so that respective upper limit temperatures are not exceeded. Each upper limit temperature is determined taking a possibility of ignition in accordance with characteristics of solid fuel or the like into consideration. Note that, since the primary air is cooled by being carried while drying pulverized solid fuel inside the housing 11, the primary air temperature at the mill inlet will range from normal temperature to about 300 degrees Celsius, for example, and the primary air temperature at the mill outlet will range from normal temperature to about 90 degrees Celsius, for example.

The control unit 50 is a device that controls each unit of the solid fuel pulverizing device 100.

For example, the control unit 50 may transfer a drive instruction to the mill motor 15 to control the rotational rate of the pulverizing table 12.

For example, the control unit 50 can control the rotational rate of the rotary classifier 16 to adjust the classification performance by transferring a drive instruction to the classifier motor 18 and stably supply, to the burner 220, an amount of pulverized fuel corresponding to the supply amount of solid fuel to the mill 10 while maintaining the particle diameter of the pulverized fuel in a range that does not affect the combustibility of the solid fuel in the burner 220.

Further, for example, the control unit 50 can adjust the feed amount (coal feed amount) of solid fuel to be fed to the mill 10 by transferring a drive instruction to the coal feeder motor 27.

Further, the control unit 50 can control the openings of the hot gas damper 30c and the cold gas damper 30d to adjust the flow rate and the temperature of the primary air by transferring an opening instruction to the fan unit 30. Specifically, the control unit 50 controls the openings of the hot gas damper 30c and the cold gas damper 30d so that the flow rate of the primary air to be supplied into the housing 11 and the temperature of the primary air at the outlet port 19 (mill outlet primary air temperature) are predetermined values set in association with a coal feed amount for each type of solid fuel. Note that the control of the temperature of the primary air may be performed on the temperature at the mill inlet (mill inlet primary air temperature).

For example, the control unit 50 is composed of a central processing unit (CPU), a random access memory (RAM), a read only memory (ROM), a computer readable storage medium, and the like. Further, a series of processes for implementing various functions are stored in a storage medium or the like in a form of a program as an example, and the various functions are implemented when the CPU loads such a program into the RAM or the like to perform modification or computation processing on information. Note that, for a program, a form in which the program is installed in advance in the ROM or another storage medium, a form in which the program is provided stored in a computer readable storage medium, a form in which the program is delivered via a wired or wireless communication connection, or the like may be applied. The computer readable storage medium may be a magnetic disk, a magneto-optical disk, a CD-ROM, a DVD-ROM, a semiconductor memory, a hard disk drive (HDD) or the like. Further, the HDD may be replaced with a solid state disk (SSD) or the like.

Next, the boiler 200 that generates steam by combustion of pulverized fuel supplied from the solid fuel pulverizing device 100 will be described. The boiler 200 includes a furnace 210 and the burner 220.

The burner 220 is a device that combusts pulverized fuel to form flame by using a mixed gas and secondary air, the mixed gas is a mixture of the pulverized fuel supplied from the pulverized fuel supply pipe 120 and the primary air, and the secondary air is supplied by using the air preheater 34 to heat air (external air) delivered from a forced draft fan (FDF) 32. Combustion of pulverized fuel takes place in the furnace 210, and the combustion gas at an elevated temperature is discharged to outside of the boiler 200 after passing through heat exchangers (not illustrated) such as an evaporator, a superheater, or an economizer.

The combustion gas discharged from the boiler 200 is subjected to predetermined treatment at an environmental device (a SCR (Selective Catalytic NOx Reduction) system, a dust collector, a desulfurizer, or the like, not illustrated), subjected to heat exchange with the primary air or the secondary air at the air preheater 34, guided to a stack (not illustrated) via an induced draft fan (IDF) 33, and released to the external air. The air heated by the combustion gas at the air preheater 34 and delivered from the primary air fan 31 is supplied to the hot gas flow channel 30a described above.

The feedwater to each heat exchanger of the boiler 200 is heated at an economizer (not illustrated) and then further heated by an evaporator (not illustrated) and a superheater (not illustrated), and thereby superheated steam at a high temperature and a high pressure is generated. The generated superheated steam is transferred to a steam turbine (not illustrated), which is a power generation unit, thereby the steam turbine is driven and rotated, the power generator (not illustrated) connected to the steam turbine is driven and rotated, and power is generated. Accordingly, the power plant 1 is configured.

Next, the pulverizing roller 13 according to the present embodiment will be described in detail with reference to Fig. 1 to Fig. 6.

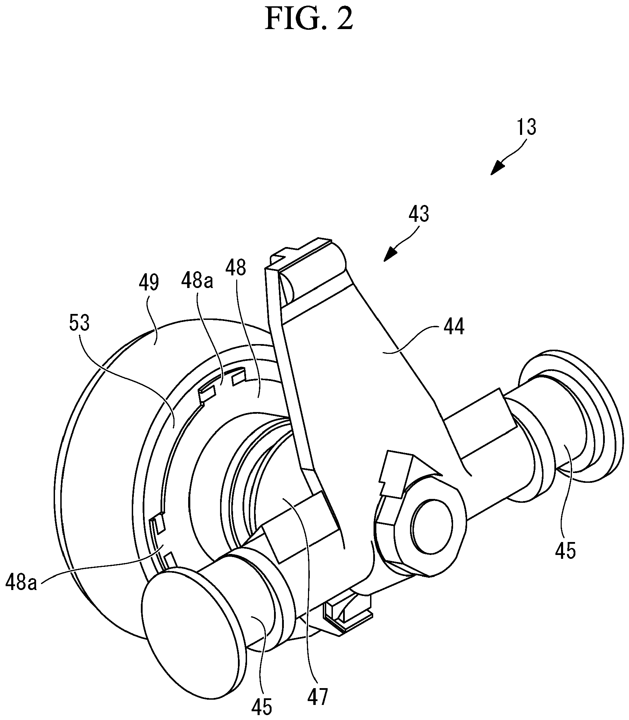

As illustrated in Fig. 1 and Fig. 2, each pulverizing roller 13 is supported rotatably about the central axis C2 with respect to the housing 11 via a journal shaft 47, a journal head 43, and a support shaft 45. The journal shaft 47 extends inclined downward to the center side of the housing 11 from a part near the side face of the housing 11. The journal shaft 47 is fixed to the journal head 43 at the base end (the end on the side face side of the housing 11). In the journal head 43, the pulverizing roller 13 is rotatably supported at the tip (the end on the center side of the mill 10) via a bearing (not illustrated). In such a way, the pulverizing roller 13 is rotatably supported vertically above the pulverizing table 12 and inclined such that the upper part thereof is located closer to the center side of the housing 11 than the lower part thereof.

Further, the journal head 43 has a restriction part (not illustrated) that restricts motion of each pulverizing roller 13 in the axis direction (a direction in which the central axis C2 of the pulverizing roller 13 extends). The restriction part is arranged so as to abut against both end faces in the axis direction of the pulverizing roller 13. That is, the restriction part is provided axially interposing the pulverizing roller 13.

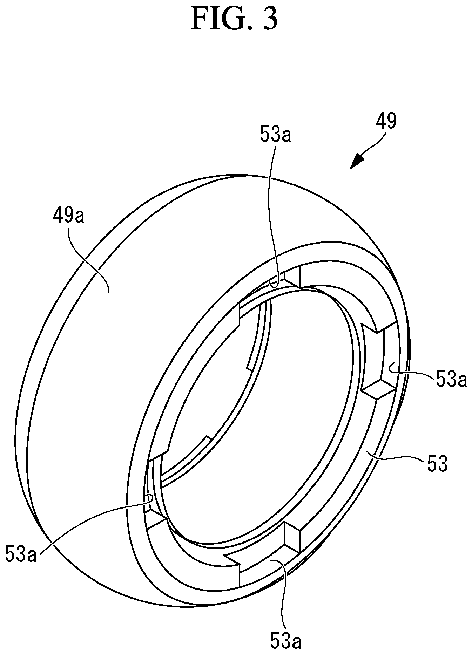

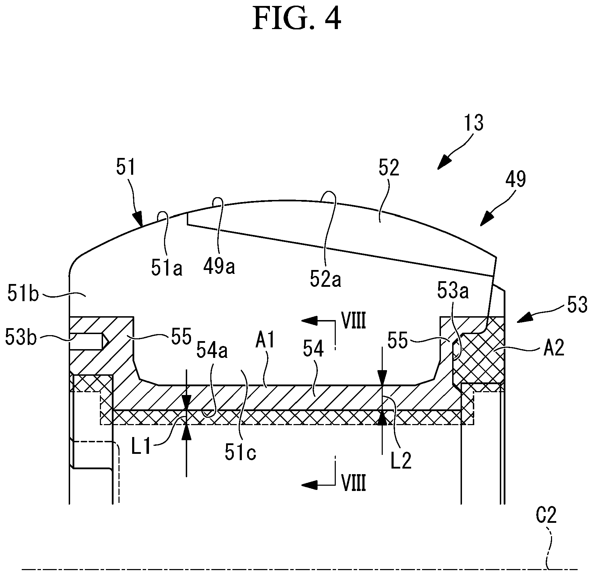

Next, details of the pulverizing roller 13 will be described with reference to Fig. 2 to Fig. 5 and the like. Fig. 4 illustrates a primary part of the longitudinal sectional view of Fig. 3. In other words, Fig. 4 illustrates a primary part of a cross section of the roller part 49 when taken along a plane including a direction in which the central axis C2 of the roller part 49 extends (hereafter, referred to as "axis direction cross section").

As illustrated in Fig. 2, the pulverizing roller 13 has a journal housing (support part) 48 rotatably supported at the tip of the journal shaft 47 and has a circular annular roller part 49 externally fitted to the journal housing 48.

The journal housing 48 is provided to cover the tip of the journal shaft 47, and the outer circumferential face of the journal housing 48 is a circular cylindrical face. Further, the journal housing 48 has, for example, four journal housing protrusions (protrusions) 48a protruding radially from the outer circumferential part. The four journal housing protrusions 48a are arranged circumferentially at equal intervals. Each journal housing protrusion 48a is engaged with an engagement recess (engagement part) 53a described later.

As illustrated in Fig. 3 and Fig. 4, the roller part 49 has a machining-subjected part 53 externally fitted to the journal housing 48, a base part 51 made of high-chromium cast iron externally fitted to the machining-subjected part 53, and a ceramic part (outer circumferential part) 52 partially containing a ceramic member provided to the outer circumferential face 51a of the base part 51. That is, the roller part 49 according to the present embodiment is a so-called ceramic-embedded roller in which the ceramic part 52 having superior wear resistance is provided in a part of the outer circumferential face 49a (the face in contact with solid fuel) of the pulverizing roller 13. Since the ceramic-embedded roller has higher wear resistance and a larger allowable wear amount than a pulverizing roller not having the ceramic part 52, the lifetime of the pulverizing roller 13 can be increased. The outer circumferential face 49a of the roller part 49 is curved arcuate in the axis direction cross section.

As illustrated in Fig. 4, the base part 51 is fixed to the outer circumferential part of the machining-subjected part 53. The base part 51 is formed in a substantially circular annular shape. Further, the base part 51 is fitted to the machining-subjected part 53 so that the inner circumferential face is in contact with the outer circumferential face of the machining-subjected part 53. The base part 51 has, in an integrated manner, an upper part 51b provided with the ceramic part 52 and a lower part 51c protruding from the center region of the end on the central axis C2 side of the upper part 51b. While the end face of the upper part 51b is exposed, the end face of the lower part 51c is covered with end face parts 55 of the machining-subjected part 53 described later.

The ceramic part 52 is fixed to the outer circumferential part of the circular annular base part 51. The ceramic part 52 is provided over substantially the entire circumferential range of the base part 51. That is, the ceramic part 52 is formed in a substantially circular annular shape. The ceramic part 52 does not cover the entire region of the outer circumferential face 51a of the base part 51 but covers the base end side of the roller part 49 out of the outer circumferential face 51a of the base part 51. Herein, the base end side refers to the journal shaft 47 side to which the pulverizing roller 13 is connected, and represents the outer circumferential side in the radial direction of the pulverizing table 12. The tip side represents the rotation central axis C1 (see Fig. 1) side in the radial direction of the pulverizing table 12. That is, the outer circumferential face 49a (the face to pulverize solid fuel) of the roller part 49 has the base end side formed of the outer circumferential face 52a of the ceramic part 52 and has the tip side (opposite to the base end side) formed of the outer circumferential face 51a of the base part 51.

The ceramic part 52 includes the ceramic member and thus has a smaller linear expansion coefficient than the base part 51 made of high-chromium cast iron. Further, the ceramic part 52 has higher wear resistance than the base part 51. The materials of the base part 51 and the ceramic part 52 are not limited to the materials described above.

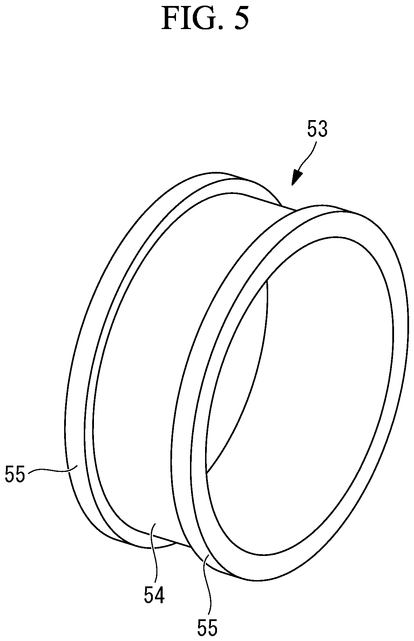

As illustrated in Fig. 4 and Fig. 5, the machining-subjected part 53 is a circular cylindrical member. The machining-subjected part 53 is externally fitted to the outer circumferential face of the journal housing 48 so that the inner circumferential face abuts against the outer circumferential face of the journal housing 48.

As illustrated in Fig. 4 and Fig. 5, the machining-subjected part 53 has, in an integrated manner, an inner circumferential part 54 covering the inner circumferential face of the base part 51 and being in contact with the outer circumferential part of the journal housing 48 and end face parts 55 forming end faces in the central axis C2 of the roller part 49. The machining-subjected part 53 is formed in a substantially rectangular, recessed shape in a cross section in the axis direction.

As illustrated in Fig. 5, the inner circumferential part 54 is a substantially circular cylindrical member. The outer circumferential face of the inner circumferential part 54 abuts against the inner circumferential face of the base part 51 (in detail, the lower part 51c of the base part 51). Each end face part 55 is bent at substantially right angle from the entire region of both ends in the axis direction of the inner circumferential part 54 and extends radially outward. The inner circumferential faces of the end face parts 55 abut against the end face of the base part 51 (in detail, the lower part 51c of the base part 51).

Further, as illustrated in Fig. 3 and Fig. 4, the machining-subjected part 53 is provided with four engagement recesses 53a. The four engagement recesses 53a are arranged circumferentially at equal intervals. The engagement recesses 53a are engaged with the journal housing protrusions 48a. As illustrated in Fig. 4, each engagement recess 53a is formed recessed from the outer circumferential face of the end face part 55 on the base end side (on the outer circumferential side in the radial direction of the pulverizing table 12) out of the two end face parts 55.

Further, the outer circumferential face of the end face part 55 on the tip side out of the two end face parts 55 is provided with a hang bolt hole 53b. Since the machining-subjected part 53 is formed of a material having good workability as described later, the hang bolt hole 53b can be easily formed. By attaching an eye bolt or the like to the hang bolt hole 53b during maintenance or the like, it is possible to hang the roller part 49. Note that a hang piece may be provided instead of the hang bolt hole 53b. Further, a piece for another purpose may be provided.

The machining-subjected part 53 is formed of a material having better workability than the base part 51 made of high-chromium cast iron. Specifically, the machining-subjected part 53 is formed of a material having lower hardness than the base part 51. Further, the machining-subjected part 53 is formed of a material having good affinity with the base part 51 made of high-chromium cast iron. Note that the material having good affinity means, for example, a material having substantially the same linear expansion coefficient as the base part 51 and having substantially the same shrinkage amount during cooling after casting or a material not causing a significant change of property in the base part 51 even when a part of the material is dissolved and melted into the base part 51 made of high-chromium cast iron. Specifically, the machining-subjected part 53 is formed of carbon steel, for example. Note that the material of the machining-subjected part 53 is not limited to carbon steel, and a material having good affinity with the base part 51 is preferable, as described above.

Next, dimensions of the machining-subjected part 53 will be described with reference to Fig. 4. Note that, in Fig. 4, a portion illustrated with hatching (hereafter, the portion illustrated with hatching is referred to as "hatched part A1") and a portion illustrated with shading (hereafter, the portion illustrated with shading is referred to as "shaded part A2") illustrate the machining-subjected part 53 immediately after the machining-subjected part 53 and the base part 51 are integrally molded. That is, a portion combining the hatched part A1 and the shaded part A2 represents the machining-subjected part 53 during manufacturing of the roller part 49. Further, the shaded part A2 represents a portion to be removed after the machining-subjected part 53 and the base part 51 are integrally molded. Further, the hatched part A1 represents the machining-subjected part 53 at completion of the pulverizing roller 13.

Further, as illustrated in Fig. 4, the dimension of the machining-subjected part 53 in a manufacturing stage (the hatched part A1 and the shaded part A2) is fabricated so as to be slightly thicker than a machining reference dimension as a whole (that is, the dimension of the machining-subjected part 53 at completion of the pulverizing roller 13 (the hatched part A1)).

The thickness L1 of the shaded part A2 is the dimension from a surface (an inner circumferential face 54a) to be the inner diameter surface at completion after machining of the machining-subjected part 53 to the inner diameter surface in the manufacturing stage of the machining-subjected part 53. The thickness L1 corresponds to a machining allowance when the roller part 49 is machined after casting, is set expecting a removal allowance of an oxidized scale of the machining-subjected part 53 occurring during the casting, and specifically is 1 mm or greater.

Further, the plate thickness L2 of the hatched part A1 is a dimension from a surface (the inner circumferential face 54a) to be the inner diameter surface at completion after machining of the machining-subjected part 53 to the outer diameter surface in the manufacturing stage of the machining-subjected part 53. When the base part 51 is cast, the dimension of the plate thickness L2 is reduced, because a part on the base part 51 side of the machining-subjected part 53 is dissolved. If the plate thickness L2 is reduced, the base part 51 may protrude toward the inner diameter side beyond the surface (the inner circumferential face 54a) to be the inner diameter surface at completion after machining of the machining-subjected part 53. In such a case, when the surface to be the inner diameter surface (the inner circumferential face 54a) of the machining-subjected part 53 is machined, various advantageous effects such as improvement in workability are not obtained, because the base part 51 with low workability is exposed. Therefore, the plate thickness L2 of the hatched part A1 is set to a dimension having a sufficient thickness that does not cause dissolution reaching the surface to be the inner diameter surface (the inner circumferential face 54a) at completion of the machining-subjected part 53 when the base part 51 is cast. Specifically, the plate thickness L2 is set to 2% or greater of the thickness of the roller part 49.

Note that the hatched part A1 and the shaded part A2 in Fig. 4 are illustrated enlarged for emphasis.

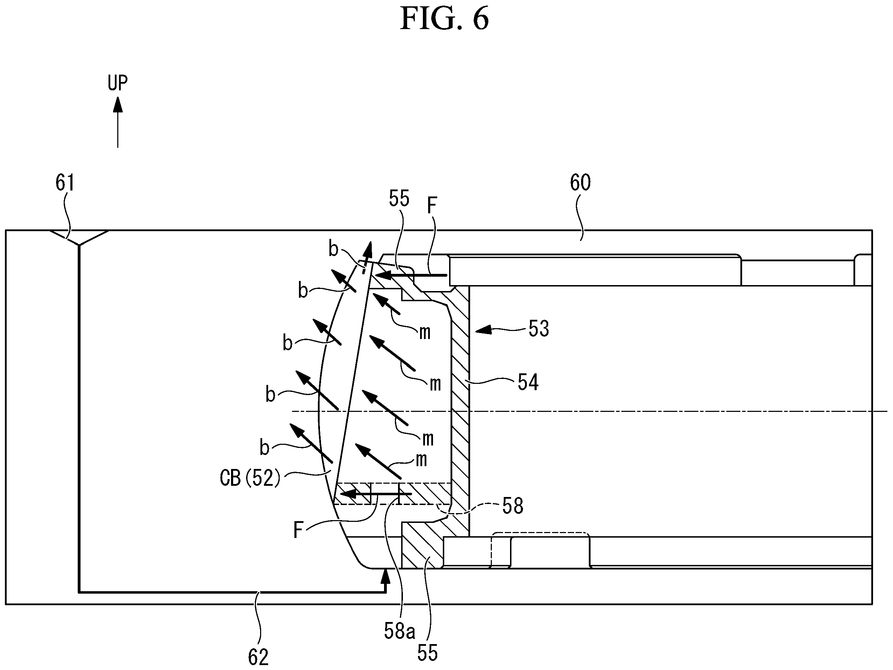

Next, a method of manufacturing the pulverizing roller 13 will be described with reference to Fig. 6. The reference "UP" in Fig. 6 represents "above" in the vertical direction.

First, ceramic particles are shaped into a block (a shape corresponding to the ceramic part 52) to manufacture the ceramic block CB (see Fig. 5) forming a part of the ceramic part 52. The ceramic block is made of bound particulate ceramics, and a relatively large number of voids are formed between ceramic particles. The external shape of the ceramic block CB is substantially the same as the external shape of the ceramic part 52.

Next, the manufactured ceramic block CB is installed at a predetermined position in a mold 60.

Next, the machining-subjected part 53 manufactured in advance is installed at a predetermined position in a mold 60. In this step, if a part of the machining-subjected part 53 abuts against the ceramic block CB and can support the ceramic block CB, such a support form may be employed. By doing so, it is possible to stably install the ceramic block CB at a predetermined position.

Note that, if an attached substance is present on a surface in contact with the base part 51 (the outer circumferential face of the machining-subjected part 53) out of the surfaces of the machining-subjected part 53, this may prevent the machining-subjected part 53 and the base part 51 from being adhered closely to each other. Therefore, before the machining-subjected part 53 is installed, the base material of at least a surface in contact with the base part 51 out of the surfaces of the machining-subjected part 53 is exposed in advance by acid washing, polishing, or the like. By doing so, it is possible to preferably adhere the machining-subjected part 53 and the base part 51 closely to each other inside the mold 60, and it is thus possible to preferably integrate the machining-subjected part 53 and the base part 51 with each other.

Further, the machining-subjected part 53 may be sufficiently preheated before molten metal is poured into the mold 60. When the machining-subjected part 53 is arranged inside the mold 60, and molten metal is then poured thereinto, the machining-subjected part 53 would serve the same function as a chill during casting and thus cool and make the molten metal shrink, which may generate a shrinkage cavity inside the base part 51. In contrast, with preheating of the machining-subjected part 53 as with the present embodiment, this reduces the degree of cooling of the molten metal and therefore can suppress occurrence of a shrinkage cavity. Note that, while a higher preheating temperature can more suppress cooling and shrinkage of molten metal, an excessively high preheating temperature may cause oxidization of the surface (in particular, the outer circumferential face) of the machining-subjected part 53 and occurrence of scale, and this may prevent the machining-subjected part 53 from preferably adhering to the base part 51. In the present embodiment, the preheating temperature is about 650 degrees Celsius from these points of view, but this temperature is a mere example, and the preheating temperature is not limited to the temperature. Further, the preheating temperature may be suitably adjusted in accordance with casting conditions such as a temperature of molten metal.

After the ceramic block CB and the machining-subjected part 53 are arranged at the predetermined positions, molten metal is then poured into the mold 60 from a sprue 61 via a runner 62. Accordingly, the molten metal is filled in the mold 60 (see arrows m). In this state, the ceramic block CB has a smaller specific gravity than the molten metal and thus pressed against predetermined positions on the inner circumferential face of the mold 60 by the floating force (see arrows b), as illustrated in Fig. 6. Further, in this state, the molten metal flows into the voids formed between the ceramic particles of the ceramic block CB.

Next, the molten metal is cooled and solidified. Accordingly, the ceramic part 52 having superior wear resistance in which metal enters voids between ceramic particles of the ceramic block CB (that is, which encloses ceramics) and the base part 51 formed only of the solidified metal are integrated with each other, the base part 51 and the machining-subjected part 53 are also integrated with each other, and the roller part 49 is completed.

As discussed above, the roller part 49 of the present embodiment is manufactured.

Next, to have predetermined dimensions of the machining-subjected part 53 of the roller part 49 taken out of the mold 60, machining is applied to the machining-subjected part 53. Specifically, machining is applied to the inner circumferential face and both end faces of the machining-subjected part 53 to remove the shaded part A2. For example, the machining is cutting.

After the roller part 49 is machined into the predetermined dimensions, next, the roller part 49 is fitted to the journal housing 48. Specifically, the roller part 49 is heated and shrink-fitted to the journal housing 48.

In such a way, the pulverizing roller 13 is assembled, and thereby the pulverizing roller 13 is manufactured.

According to the present embodiment, the following effects and advantages are achieved.

In the present embodiment, the roller part 49 is externally fitted to the outer circumferential part of the journal housing 48. Accordingly, the portion in contact with the outer circumferential part of the journal housing 48 of the roller part 49 is required to be machined such as being cut in order to have precise predetermined dimensions. In the present embodiment, the machining-subjected part 53 has the inner circumferential part covering the inner circumferential face of the base part 51 and being in contact with the outer circumferential part of the journal housing 48. Therefore, in the present embodiment, machining is applied to the inner circumferential part of the machining-subjected part 53. Since the machining-subjected part 53 has lower hardness than the base part 51, machining can be easily applied to the machining-subjected part 53. Therefore, compared to a case where the base part 51 is machined in order to have predetermined dimensions of the roller part 49, machining such as cutting can be more easily applied, and the manufacturing cost can be reduced.

Further, similarly, in the present embodiment, the machining-subjected part 53 has the end face part 55 forming an end face of the roller part 49. Accordingly, compared to a case where the end face of the roller part 49 is formed of the base part 51, the end face of the roller part 49 can be more easily machined. Therefore, compared to a case where machining is applied to the base part 51, machining such as cutting can be more easily applied, and the manufacturing cost can be reduced.

In the present embodiment, the machining-subjected part 53 has the engagement recesses 53a. Engagement of the journal housing protrusions 48a and the engagement recesses 53a restricts relative motion of the journal housing 48 and the machining-subjected part 53 (roller part 49). Accordingly, the machining-subjected part 53 and the journal housing 48 can be firmly fixed to each other.

Further, in the present embodiment, the engagement recesses 53a are formed in the machining-subjected part 53. Since the machining-subjected part 53 has lower hardness than the base part 51, machining can be easily applied to the machining-subjected part 53. Therefore, compared to a case where the engagement recesses 53a are formed in the base part 51, the engagement recesses 53a can be more easily machined.

Note that the present disclosure is not limited to the embodiment described above, and suitable modification is possible within the scope not departing from the spirit thereof.

For example, the solid fuel to be used is not limited to the present disclosure, and coal, biomass fuel, petroleum coke (PC), or the like can be used. Furthermore, these types of solid fuel can be used in combination.

Further, although the example in which a ceramic-embedded roller in which the ceramic part 52 is provided to the base part 51 is used as the pulverizing roller 13 has been described in the above embodiment, the present disclosure is not limited thereto. For example, the pulverizing roller 13 may be a pulverizing roller without the ceramic part 52 being provided. Even with such a roller, if the machining-subjected part 53 is provided to the inner circumferential face of the roller part 49, the same advantages as those in the above embodiment are achieved.

Further, although the example of making the workability of the machining-subjected part 53 better than the workability of the base part 51 by reducing the hardness of the machining-subjected part 53 to be lower than the hardness of the base part 51 has been described in the above embodiment, the present disclosure is not limited thereto. The workability of the machining-subjected part 53 can be made better based on at least one property of hardness, strength, stretchability, composition, and weldability of the material. For example, the workability of the machining-subjected part 53 may be improved in accordance with strength. In such a case, it is conceivable to reduce the strength of the machining-subjected part 53 to be lower than the strength of the base part 51. Further, the workability of the machining-subjected part 53 may be improved in accordance with stretchability. In such a case, it is conceivable to increase the stretch of the machining-subjected part 53 to be larger than the stretch of the base part 51. In other words, it is conceivable to make the machining-subjected part 53 more easily stretch than the base part 51. Further, the workability of the machining-subjected part 53 may be improved in accordance with composition (in other words, components). In such a case, it is conceivable to add lead, sulfur, or the like to the material of the machining-subjected part 53 or increase the content of lead, sulfur, or the like in the machining-subjected part 53 to be higher than the content of lead, sulfur, or the like in the base part 51. Further, the workability of the machining-subjected part 53 may be improved in accordance with weldability. In such a case, it is conceivable to adjust the carbon equivalent, the impurity content, or the hardness of the machining-subjected part 53 and the base part 51.

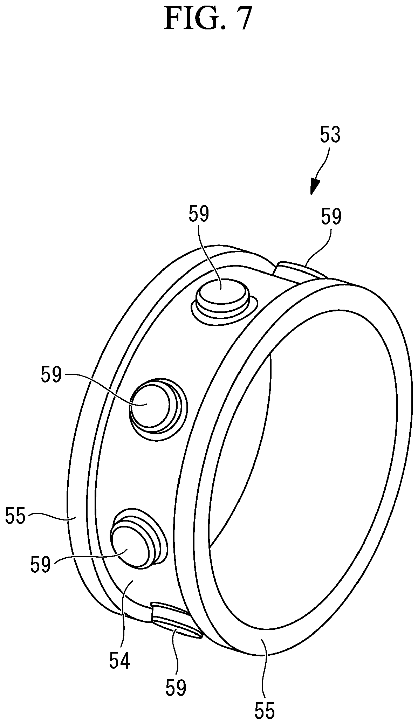

Further, for example, the machining-subjected part 53 and the base part 51 are subjected to a pulverizing load during operation of the mill 10. Accordingly, as illustrated in Fig. 7, a plurality of protruding parts 59 protruding from the outer circumferential face of the machining-subjected part 53 (in detail, the outer circumferential face of the inner circumferential part 54) may be provided so that detachment does not easily occur. The plurality of protruding parts 59 are arranged circumferentially at equal intervals. In such a case, the base part 51 is provided with recesses (not illustrated) that are engaged with respective protruding parts 59.

Engagement of the protruding parts 59 and the recesses restricts relative motion of the machining-subjected part 53 and the base part 51. Accordingly, the machining-subjected part 53 and the base part 51 can be firmly fixed to each other.

Further, in the machining-subjected part 53, it is preferable to form the inner circumferential part 54 and the end face part 55 integrally as much as possible. Specifically, when the material of the machining-subjected part 53 is a weldable material, it is preferable that each edge be welded with full penetration welding in advance. When the material of the machining-subjected part 53 is a non-weldable material, it is desirable to shape the machining-subjected part 53 in an integrated manner by forging, casting, cutting, or the like. When the machining-subjected part 53 is not integrated, a seam between members remains as a gap, which may act as a deep crack after casting and serve as a starting point of damage. The forming in an integrated manner can suppress such damage.

Further, it is preferable that the dimension of the machining-subjected part 53 be determined with sufficient margin so that the base part 51 is not exposed to the inner diameter surface (the inner circumferential face 54a) at completion of the machining-subjected part 53 even when thermal expansion due to casting, shrinkage due to cooling, and deformation thereby are taken into consideration.

Further, when the material of the machining-subjected part 53 is a weldable material such as carbon steel (low carbon steel), welding repairment is possible even when erroneous fabrication such as excessive cutting by machining occurs. Therefore, the yield can be improved. However, local heating may occur during welding and this may cause a crack of the base part 51, and it is therefore preferable to sufficiently preheat the whole roller part 49 during welding and perform repairment with the least welding heat input.

Further, to suppress oxidized scale from occurring in the machining-subjected part 53 or the like during casting, the casting may be performed in vacuum. Further, to reduce the oxygen concentration, an inert gas such as a nitrogen gas, an argon gas, or the like may be supplied into the mold 60. Further, the heating may be performed in a reduced atmosphere such as carbon monoxide to suppress occurrence of oxidized scale.

In the machining-subjected part 53, a corner of the surface in contact with the base part 51 (for example, the inner surface of the connecting portion between the inner circumferential part 54 and the end face part 55) may be a curved surface (that is, round (R)-machined). In such a case, it is preferable to take a large radius of curvature R of the curved surface. When this surface forms an angular corner, molten metal does not flow into the corner during casting, which may result in a hollow and thus cause a cavity. However, the curved surface can suppress occurrence of such a cavity. Note that chamfer (C) machining may be employed instead of R machining.

Further, when the machining-subjected part 53 is made of carbon steel, ultrasonic wave inspection can be effectively performed thereon. After casting, ultrasonic waves may be transmitted from the machining-subjected part 53 to the base part 51 side, inspection may be performed as to whether or not no cavity occurs between the machining-subjected part 53 and the base part 51, whether or not the machining-subjected part 53 is not dissolved before machining causing a thinner thickness of the machining-subjected part 53 than the machining reference dimension, or the like.

Further, as illustrated by dashed lines of Fig. 6, the machining-subjected part 53 may be provided with an abutment part 58 that supports the ceramic block CB during casting. The abutment part 58 extends straight radially outward from the outer circumferential face of the inner circumferential part 54. The tip of the abutment part 58 abuts against the ceramic block CB. Further, the hole 58a through which molten metal passes may be formed in the abutment part 58. In this state, the abutment part 58 supports the end face side of the ceramic block CB (see arrows F). That is, the abutment part 58 does not support the center region of the ceramic block CB. This is to prevent the machining-subjected part 53 from being installed to a severely worn portion near the center of the pulverizing roller 13, because the machining-subjected part 53 has lower wear resistance than the base part 51.

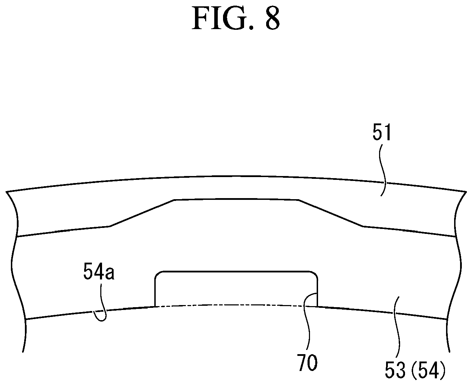

Further, as illustrated in Fig. 8, a key groove 70 is installed in the machining-subjected part 53. Fig. 8 is a sectional view corresponding to a cross section taken along arrow VIII-VIII of Fig. 4. The key groove 70 extends along the central axis C2. In such a case, a key (not illustrated) engaged with the key groove 70 is formed in the outer circumferential face of the journal housing 48. By doing so, the machining-subjected part 53 and the journal housing 48 can be firmly fixed to each other.

If the key groove is formed in the base part 51 formed of a material having high hardness such as high-chromium cast iron, stress may concentrate at the corner of the key groove and cause a starting point of a crack. However, since the machining-subjected part 53 is manufactured from carbon steel having relatively low hardness and high toughness, occurrence of a starting point of a crack can be suppressed. Note that, as illustrated in Fig. 8, it is preferable to form the portion where the key groove 70 of the machining-subjected part 53 is formed to be thicker than the remaining portion in advance. This can make it difficult for the blade to reach the base part 51 during machining to form the key groove 70.

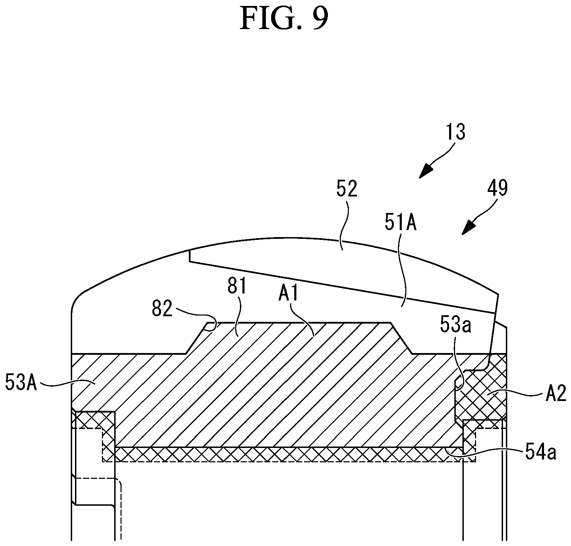

Further, although the example in which the shape of the machining-subjected part is a substantially rectangular, recessed shape has been described in the above embodiment, the present disclosure is not limited thereto. For example, as illustrated in Fig. 9, a machining-subjected part 53A may have a protruding part 81 protruding to a base part 51A side in substantially the center region in the axis direction. In such a case, a recess 82 engaged with the protruding part 81 is formed in the inner circumferential face of the base part 51.

Engagement of the protruding part 81 and the recess 82 restricts relative motion of the machining-subjected part 53A and the base part 51A. Accordingly, the machining-subjected part 53A and the base part 51A can be firmly fixed to each other.

Further, compared to a case where the recess 82 is not provided, the volume of the base part 51A can be reduced. Therefore, the amount of the material used in manufacturing of the base part 51A can be reduced. Thus, the manufacturing cost of the pulverizing roller 13 can be reduced.

Further, since the volume of the base part 51A can be reduced, the amount of molten metal required in manufacturing of the base part 51A can be reduced. Therefore, the blast furnace for manufacturing molten metal can be reduced in size.

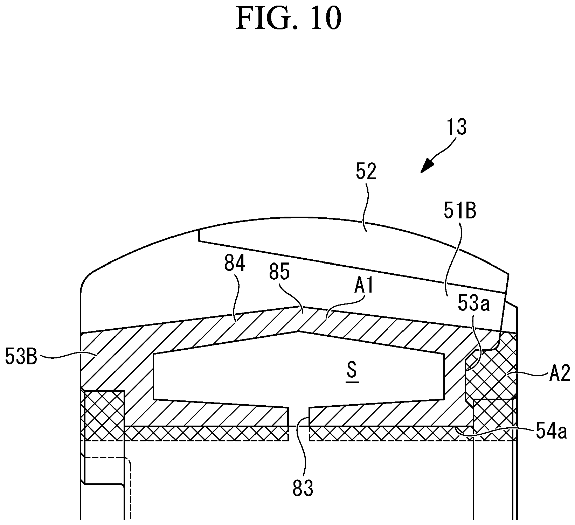

Note that the shape of the protruding part is not limited to the example of Fig. 9. For example, as with a protruding part 85 of Fig. 10, the protruding part may protrude over the entire region of the outer circumferential face of the machining-subjected part 53B with an even slope angle.

Further, as illustrated in Fig. 10, a space S may be formed inside the machining-subjected part 53B forming a hollowed machining-subjected part 53B. Because the space S is formed, the amount of the material used in manufacturing of the machining-subjected part 53B can be reduced compared to a case where no space is formed. Thus, the manufacturing cost of the pulverizing roller 13 can be reduced.

Note that the machining-subjected part 53B has a connecting part 83 connecting the space S to outside of the machining-subjected part 53B. The machining-subjected part 53B is at a high temperature during manufacturing of the roller part 49. Thus, if the space formed inside the machining-subjected part were a closed space, the air inside the closed space would expand, and the machining-subjected part may be damaged by the pressure due to the expansion. In contrast, if the connecting part 83 connecting the space S formed inside the machining-subjected part 53B to the outside of the machining-subjected part 53B is formed, even when the air of the space S inside the machining-subjected part 53B expands during manufacturing of the roller part 49, the expanding air is discharged from the connecting part 83 to the outside of the machining-subjected part 53B. It is therefore possible to suppress the pressure of the space S inside the machining-subjected part 53B from increasing.

Further, when the space S is formed, dissolution of a partition wall 84 between the base part 51B and the space S may cause molten metal to flow into the space S, and it is therefore preferable to make the thickness of the partition wall 84 large enough so that the partition wall 84 is not dissolved. In any cases, it is essential to make the structure sufficiently bearable against the pulverizing load (impact, fatigue) of the roller during operation of the mill 10.

The pulverizing roller, the solid fuel pulverizing device, and the manufacturing method of the pulverizing roller described in the above embodiment are understood as follows, for example. The pulverizing roller according to one aspect of the present disclosure is a pulverizing roller (13) accommodated in a housing (11) and configured to hold solid fuel between a rotating pulverizing table (12) and the pulverizing roller to pulverize the solid fuel, the pulverizing roller (13) being forced to rotate by being subjected to rotational force from the pulverizing table (12). The pulverizing roller (13) includes: a support part (48) supported rotatably about a central axis (C2) with respect to the housing (11); and a circular annular roller part (49) externally fitted to an outer circumferential part of the support part (48) and configured to pulverize solid fuel between the pulverizing table (12) and the roller part, the roller part (49) has a machining-subjected part (53) externally fitted to the outer circumferential part of the support part (48) and has a base part (51) provided to an outer circumferential part of the machining-subjected part (53), and the machining-subjected part has an inner circumferential part (54) covering an inner circumferential face of the base part (51) and being in contact with the outer circumferential part of the support part, has an end face part (55) forming an end face in a direction of the central axis (C2) of the roller part (49), and is formed of a material having better workability than the base part (51).

In the above configuration, the roller part is externally fitted to the outer circumferential part of the support part. Accordingly, the portion in contact with the outer circumferential part of the support part of the roller part is required to be machined such as being cut in order to have precise predetermined dimensions. In the above configuration, the machining-subjected part has the inner circumferential part covering the inner circumferential face of the base part and being in contact with the outer circumferential part of the support part. Therefore, in the above configuration, machining is applied to the inner circumferential part of the machining-subjected part. Since the machining-subjected part has better workability than the base part, machining can be easily applied to the machining-subjected part. Therefore, compared to a case where machining is applied to the base part in order to have predetermined dimensions of the roller part, machining such as cutting can be more easily applied, and the manufacturing cost can be reduced.

Further, similarly, in the above configuration, the machining-subjected part has the end face part forming an end face of the roller part. Accordingly, compared to a case where the end face of the roller part is formed of the base part, the end face of the roller part can be more easily machined. Therefore, compared to a case where machining is applied to the base part, machining such as cutting can be more easily applied, and the manufacturing cost can be reduced.

Further, in the pulverizing roller according to one aspect of the present disclosure, the workability is based on at least one property of hardness, strength, stretchability, composition, and weldability of a material.

In the above configuration, the workability is based on at least one property of hardness, strength, stretchability, composition, and weldability of the material.

Accordingly, it is possible to obtain desired workability by adjusting the hardness, the strength, the stretchability, the composition, or the weldability.

Note that, when the workability is improved in accordance with hardness, it is conceivable to reduce the hardness. Further, when the workability is improved in accordance with strength, it is conceivable to reduce the strength. Further, when the workability is improved in accordance with stretchability, it is conceivable to increase stretch (make it easily stretch). Further, when the workability is improved in accordance with composition (in other words, components), it is conceivable to add lead, sulfur, or the like or increase the content of lead, sulfur, or the like. Further, when the workability is improved in accordance with weldability, it is conceivable to adjust the carbon equivalent, the impurity content, or the hardness.

Further, in the pulverizing roller according to one aspect of the present disclosure, the support part (48) has a protrusion (48a) protruding toward the roller part (49) side, and the machining-subjected part (53) has an engagement part (53a) engaged with the protrusion (48a).

In the above configuration, the machining-subjected part has an engagement part. Engagement of the protrusion and the engagement part restricts the relative motion of the support part and the machining-subjected part (the roller part). Accordingly, the machining-subjected part and the support part can be firmly fixed to each other.

Further, in the above configuration, the engagement part is formed in the machining-subjected part. Since the machining-subjected part has lower hardness than the base part, machining can be easily applied to the machining-subjected part. Therefore, compared to a case where the engagement part is formed in the base part, the engagement part can be more easily machined.

Note that the engagement part may be engaged with the protrusion to restrict circumferential relative motion of the support part and the roller part.

Further, in the pulverizing roller according to one aspect of the present disclosure, the machining-subjected part (53) has a protruding part (59) protruding from an outer circumferential face of the machining-subjected part, and the base part (51) has, in the inner circumferential face, a recess being engaged with the protruding part (59).

In the above configuration, the base part has the recess engaged with the protruding part. Accordingly, engagement of the protruding part and the recess restricts relative motion of the machining-subjected part and the base part. Thus, the machining-subjected part and the base part can be firmly fixed to each other.

In the above configuration, the base part has the recess engaged with the protruding part. Accordingly, compared to a case where the recess is not provided, the volume of the base part can be reduced. Therefore, the amount of the material used in manufacturing of the base part can be reduced. Thus, the manufacturing cost of the pulverizing roller can be reduced.

Further, since the volume of the base part can be reduced, the amount of molten metal required in manufacturing of the base part can be reduced when the base part has been formed by cooling and solidifying the molten metal. Therefore, the blast furnace for manufacturing molten metal can be reduced in size.

Further, in the pulverizing roller according to one aspect of the present disclosure, a space is formed inside the machining-subjected part, and the machining-subjected part has a connecting part connecting the space to outside of the machining-subjected part.

In the above configuration, a space is formed inside the machining-subjected part. Accordingly, the amount of the material used in manufacturing of the machining-subjected part can be reduced compared to a case where no space is formed. Thus, the manufacturing cost of the pulverizing roller can be reduced.

Further, for example, when the machining-subjected part is manufactured by casting or the like, the machining-subjected part is at a high temperature during manufacturing of the machining-subjected part. Thus, if a closed space were formed inside the machining-subjected part, the air inside the closed space would expand, and the machining-subjected part may be damaged by the pressure due to the expansion. In the above configuration, the connecting part connecting the space formed inside the machining-subjected part to the outside of the machining-subjected part is formed. Thus, even when the air of the space inside the machining-subjected part expands during manufacturing of the machining-subjected part, the expanding air is discharged from the connecting part to the outside of the machining-subjected part. It is therefore possible to suppress the pressure of the space inside the machining-subjected part from increasing.

Further, in the pulverizing roller according to one aspect of the present disclosure, the roller part (49) has a ceramic part (52) provided on the outer circumferential face of the base part (51) and enclosing ceramics, and the machining-subjected part (53) has an abutment part (58) abutting against the ceramic part (52).

In the above configuration, the machining-subjected part has the abutment part that abuts against the ceramic part. Accordingly, for example, when the molten metal to form the base part after cooled and solidified is poured into the mold and thereby the machining-subjected part, the base part, and the ceramic part are manufactured by casting, the ceramic part can be supported in the mold by the abutment part of the machining-subjected part. By doing so, it is possible to stably install the ceramic part at a predetermined position.

Further, the solid fuel pulverizing device according to one aspect of the present disclosure includes: the pulverizing roller (13) according to any one of the above; a pulverizing table (12) configured to rotate and hold solid fuel between the pulverizing roller (13) and the pulverizing table (12) to pulverize the solid fuel; and a housing (11) accommodating the pulverizing roller (13) and the pulverizing table (12).

Further, the manufacturing method of a pulverizing roller according to one aspect of the present disclosure is a manufacturing method of a pulverizing roller (13) accommodated in a housing (11) and configured to hold solid fuel between a rotating pulverizing table (12) and the pulverizing roller to pulverize the solid fuel, the pulverizing roller (13) being forced to rotate by being subjected to rotational force from the pulverizing table. The pulverizing roller (13) includes a support part (48) supported rotatably about a central axis (C2) with respect to the housing (11) and a circular annular roller part (49) externally fitted to an outer circumferential part of the support part (48) and configured to pulverize solid fuel between the pulverizing table (12) and the roller part, the roller part (49) has a machining-subjected part (53) externally fitted to the outer circumferential part of the support part (48) and has a base part (51) provided to an outer circumferential part of the machining-subjected part (53), and the machining-subjected part has an inner circumferential part (54) covering an inner circumferential face of the base part (51) and being in contact with the outer circumferential part of the support part, has an end face part (55) forming an end face in a direction of the central axis (C2) of the roller part (49), and is formed of a material having lower hardness than the base part (51). The manufacturing method includes: a casting step of integrally molding the machining-subjected part (53) and the base part (51) by casting; and a machining step of applying machining to the machining-subjected part (53) after the casting step.

### [Reference Signs List]

- 1: power plant
- 10: mill
- 11: housing
- 12: pulverizing table
- 13: pulverizing roller
- 14: gear
- 15: mill motor
- 16: rotary classifier
- 16a: blade
- 17: coal feed pipe
- 18: classifier motor
- 19: outlet port
- 21: bunker
- 22: downspout part
- 25: coal feeder
- 26: transport unit
- 27: coal feeder motor
- 30: fan unit
- 30a: hot gas flow channel
- 30b: cold gas flow channel
- 30c: hot gas damper
- 30d: cold gas damper
- 31: primary air fan
- 32: forced draft fan
- 33: induced draft fan
- 34: air preheater
- 40: state detecting unit
- 41: bottom face
- 42: ceiling
- 43: journal head
- 44: support arm
- 45: support shaft
- 46: pressing device
- 47: journal shaft
- 48: journal housing
- 48a: journal housing protrusion
- 49: roller part
- 49a: outer circumferential face
- 50: control unit
- 51: base part
- 51A: base part
- 51B: base part
- 51a: outer circumferential face
- 51b: upper part
- 51c: lower part
- 52: ceramic part
- 52a: outer circumferential face
- 53: machining-subjected part
- 53A: machining-subjected part
- 53B: machining-subjected part
- 53a: engagement recess
- 54: inner circumferential part
- 54a: inner diameter at completion (inner circumferential face)
- 55: end face part
- 58: abutment part
- 58a: hole
- 59: protruding part
- 60: mold
- 61: sprue
- 62: runner
- 70: key groove
- 81: protruding part
- 82: recess
- 83: connecting part
- 84: partition wall
- 100: solid fuel pulverizing device
- 110: primary air flow channel
- 120: pulverized fuel supply pipe
- 200: boiler
- 210: furnace
- 220: burner

## Claims

1. A pulverizing roller accommodated in a housing and configured to hold solid fuel between a rotating pulverizing table and the pulverizing roller to pulverize the solid fuel, the pulverizing roller being forced to rotate by being subjected to rotational force from the pulverizing table, the pulverizing roller comprising:
a support part supported rotatably about a central axis with respect to the housing; and
a circular annular roller part externally fitted to an outer circumferential part of the support part and configured to pulverize solid fuel between the pulverizing table and the roller part,
wherein the roller part has a machining-subjected part externally fitted to the outer circumferential part of the support part and has a base part provided to an outer circumferential part of the machining-subjected part, and
wherein the machining-subjected part has an inner circumferential part covering an inner circumferential face of the base part and being in contact with the outer circumferential part of the support part, has an end face part forming an end face in a direction of the central axis of the roller part, and is formed of a material having better workability than the base part.

2. The pulverizing roller according to claim 1, wherein the workability is based on at least one property of hardness, strength, stretchability, composition, and weldability of a material.

3. The pulverizing roller according to claim 1 or 2,
wherein the support part has a protrusion protruding toward the roller part side, and wherein the machining-subjected part has an engagement part engaged with the protrusion.

4. The pulverizing roller according to any one of claims 1 to 3,
wherein the machining-subjected part has a protruding part protruding from an outer circumferential face of the machining-subjected part, and
wherein the base part has, in the inner circumferential face, a recess being engaged with the protruding part.

5. The pulverizing roller according to any one of claims 1 to 4,
wherein a space is formed inside the machining-subjected part, and wherein the machining-subjected part has a connecting part connecting the space to outside of the machining-subjected part.

6. The pulverizing roller according to any one of claims 1 to 5,
wherein the roller part has a ceramic part provided on the outer circumferential face of the base part and enclosing ceramics, and
wherein the machining-subjected part has an abutment part abutting against the ceramic part.

7. A solid fuel pulverizing device comprising:
the pulverizing roller according to any one of claims 1 to 6;
a pulverizing table configured to rotate and hold solid fuel between the pulverizing roller and the pulverizing table to pulverize the solid fuel; and
a housing accommodating the pulverizing roller and the pulverizing table.

8. A manufacturing method of a pulverizing roller accommodated in a housing and configured to hold solid fuel between a rotating pulverizing table and the pulverizing roller to pulverize the solid fuel, the pulverizing roller being forced to rotate by being subjected to rotational force from the pulverizing table, wherein the pulverizing roller comprises
a support part supported rotatably about a central axis with respect to the housing, and a circular annular roller part externally fitted to an outer circumferential part of the support part and configured to pulverize solid fuel between the pulverizing table and the roller part,
wherein the roller part has a machining-subjected part externally fitted to the outer circumferential part of the support part and has a base part provided to an outer circumferential part of the machining-subjected part, and
wherein the machining-subjected part has an inner circumferential part covering an inner circumferential face of the base part and being in contact with the outer circumferential part of the support part, has an end face part forming an end face in a direction of the central axis of the roller part, and is formed of a material having better workability than the base part,
the manufacturing method comprising:
a casting step of integrally molding the machining-subjected part and the base part by casting; and
a machining step of applying machining to the machining-subjected part after the casting step.
